# FASCICULE DE BREVET EUROPEEN

(11) **EP 0 402 264 B1**
(45) Date de publication et mention de la délivrance du brevet: **14.12.1994**
(21) Numéro de dépôt: 90401557.5
(22) Date de dépôt: 07.06.1990
(51) Int. Cl.: A23C 19/05

(54) **Procédé de fabrication de produits laitiers**
Verfahren zur Herstellung von Milchprodukten
Process for the fabrication of milk-products

(30) Priorité: 08.06.1989 FR 8907602
(43) Date de publication de la demande: 12.12.1990
(73) Titulaire: Roquette Frères, F-62136 Lestrem (FR)
(72) Inventeur: Saniez, Marie-Hélène, F-59130 Lambersart (FR); Serpelloni, Michel, F-62660 Beuvry-les-Bethune (FR)
(74) Mandataire: Koch, Gustave

(56) Documents cités:
- FR-A- 2 591 432
- FR-A- 2 591 433
- FR-A- 2 591 434
- FR-A- 2 591 435

## Description

L'invention a pour objet l'utilisation des ions gluconiques et/ou glucoheptoniques pour la lutte contre la prolifération des phages dans la fabrication de produits laitiers.

Il est connu que la fabrication des produits laitiers --expression englobant les yaourts, les fromages frais, les fromages emprésurés et les grands levains-- comprend la formation de ce qu'on appelle le caillé qui est lui-même, au moins partiellement, le résultat de l'action acidifiante sur la matière de départ --à savoir le lait-- d'un ou plusieurs acides et/ou d'un ou plusieurs microorganismes bactériens de la famille des ferments lactiques acidifiants, éventuellement en présence d'une enzyme coagulante et/ou d'un ou plusieurs ferments lactiques à action aromatisante.

Il est également connu que les microorganismes de la famille des ferments lactiques, tout comme d'autres bactéries, lorsqu'ils se trouvent en présence de bactériophages spécifiques, sont attaqués et lysés, c'est-à-dire détruits, par ces virus qui prolifèrent à leurs dépens.

Or, la prolifération des bactériophages et la destruction subséquente des ferments lactiques se traduisent, suivant la nature des ferments lactiques concernés, par une perturbation de l'acidification du lait --et, par voie de conséquence, de la formation du caillé, perturbation dont les conséquences économiques peuvent être désastreuses-- et/ou par une perturbation des qualités organoleptiques des produits laitiers obtenus.

Il s'ensuit que la lutte contre la prolifération des bactériophages, ou plus simplement des phages, qui résistent aux traitements classiques de pasteurisation, constitue l'une des préoccupations majeures de l'industrie des produits laitiers.

Ainsi, il a été proposé d'avoir recours à des désinfectants tels que les hypochlorites, les iodophores et le formol; mais, même avec une hygiène rigoureuse (notamment par stérilisation de l'air et du matériel depuis le seau jusqu'à la cuve de fabrication), il est difficile et coûteux d'éliminer totalement les bactériophages.

Il a également été proposé de mettre à profit le fait que les phages ont besoin de la présence d'ions calcium pour pouvoir infecter les bactéries. Ainsi, des milieux de culture dits "anti-phages", propres à éliminer ou bloquer les ions calcium, sont récemment apparus sur le marché; il s'agit, en général, de mélanges complexes contenant du lait déshydraté ou non, des facteurs de croissance et des quantités importantes de phosphates pour séquestrer les ions calcium.

Or, ces quantités importantes de phosphates présentes dans les milieux anti-phages peuvent causer des dommages métaboliques aux cultures de levains lactiques.

Et, surtout, la complexation du calcium a une influence négative sur les aptitudes fromagères du lait, en particulier sur la coagulation (allongement du temps de coagulation, moins grande fermeté du gel).

Il a encore été proposé soit de supprimer la phase dite de maturation des laits de fromagerie, soit de changer de ferments lactiques à chaque remplissage de cuve.

Il est vrai que, dans le premier cas, les ferments lactiques étant directement ensemencés dans la cuve de fabrication pendant le remplissage de celle-ci, les phages présents sont piégés dans le réseau du caillé formé lors de la coagulation après l'addition de la présure qui intervient de préférence le plus tôt possible après l'ensemencement; mais, outre le coût élevé de cette façon de procéder, la suppression de la maturation n'est pas sans conséquences et reste donc nécessaire dans le cas des laits traités thermiquement par un stockage au froid ou un traitement de pasteurisation.

Dans le deuxième cas, on réduit considérablement le risque d'attaque des phages et les conséquences de cette dernière mais, par contre, on augmente considérablement les coûts de production; de plus, la rotation des souches, c'est-à-dire le changement de souche de ferments lactiques à chaque remplissage, entraîne des variations au niveau du temps d'acidification, au niveau de la quantité de ferments à ajouter et surtout sur le plan des qualités organoleptiques des produits laitiers finis.

Il est connu, par les documents antérieurs FR-A-2 591 435, FR-A-2 591 434, FR-A-2 591 433 et FR-A-2 591 432, d'avoir recours à un agent acidogène et notamment à la gluconodeltalactone susceptible de libérer des ions gluconiques pour acidifier, dans des procédés de fabrication de produits laitiers, le lait au cours de la phase de maturation en vue de l'emprésurage en lieu et à la place des ferments lactiques classiquement utilisés qui sont alors ajoutés au moment de l'emprésurage; dans ces procédés, les ions gluconiques et les ferments lactiques ne sont pas présents simultanément au cours de la phase de maturation.

Or, la Société Demanderesse a eu le mérite de trouver que les ions gluconiques et glucoheptoniques inhibaient le développement des phages spécifiques des ferments lactiques.

Par conséquent, l'invention a pour objet l'utilisation des ions gluconiques et glucoheptoniques pour la lutte contre la prolifération des phages dans la fabrication de produits laitiers.

Suivant un mode de réalisation avantageux, la quantité d'ions gluconiques et glucoheptoniques mise en oeuvre est de 2 à 500 g/hectolitre de lait.

Suivant un autre mode de réalisation avantageux de l'invention, la fabrication de produits laitiers comporte au moins l'une des étapes classiques suivantes, à savoir:
- celle de maturation du lait au cours de laquelle ce dernier est mis en présence de ferments lactiques acidifiants et/ou de ferments lactiques aromatisants,
- celle d'emprésurage,
- celle de coagulation et
- celle d'affinage ainsi que
- celles comprenant les traitements mécaniques classiques situés entre les étapes de coagulation et d'affinage,
étant entendu que l'on met en oeuvre une quantité efficace d'au moins l'un des ions gluconiques et glucoheptoniques au plus tard au moment de la mise en oeuvre des ferments lactiques.

Dans la pratique, les ions en question sont mis en oeuvre au moment de la phase de maturation.

Grâce à l'invention, il devient possible d'agir efficacement contre le développement des phages spécifiques des susdits ferments lactiques sans effet défavorable sur la fabrication proprement dite des produits laitiers visés et les propriétés organoleptiques de ces derniers.

Se proposant, par conséquent, de lutter contre la prolifération des phages spécifiques des ferments lactiques dans l'industrie des produits laitiers, on met à profit la faculté surprenante et inattendue des ions gluconiques et glucoheptoniques que la Demanderesse a eu le mérite de découvrir et grâce à laquelle le développement des susdits phages se trouve inhibé en leur présence.

En conséquence, on procède, de préférence, de telle sorte que lesdits ions soient présents dans le lait constituant la matière première pour la fabrication d'un produit laitier du genre en question au moment où l'on met en oeuvre les ferments lactiques.

Le lait utilisé peut être un lait ou un mélange de laits de toute origine, reconstitué ou non, cru ou ayant subi un traitement thermique préalable; il peut être standardisé en matière grasse et/ou en matière protéique, et/ou en matière minérale; on peut aussi utiliser un lait concentré, par exemple par ultra-filtration.

L'ion gluconique et/ou l'ion glucoheptonique peuvent être amenés par l'acide correspondant, par les sels alcalins, dont les sels d'ammonium ou par les sels alcalino-terreux de ces acides; de préférence, l'ion gluconique est amené sous la forme d'une gluconolactone ou d'une glucoheptonolactone, la glucono-delta-lactone étant particulièrement préférée.

L'acide, le sel ou la lactone peuvent être mis en oeuvre sous la forme d'une solution dans de l'eau ou dans du lait, ou sous la forme de poudre, auquel cas leur dispersion dans le lait et leur solubilisation sont assurées par tout moyen d'agitation approprié.

L'ion gluconique et/ou glucoheptonique devant être présents au moment de la mise en oeuvre des ferments lactiques, on peut les introduire dans le lait cru ou dans le lait ayant préalablement subi un traitement thermique, ou encore dans les cuves dites de "grand levain", dans lesquelles on cultive les ferments lactiques en vue de leur utilisation dans le procédé de fabrication du produit laitier considéré ou dans les cuves de matu-ration.

Avantageusement, la quantité d'anion gluconique et/ou glucoheptonique mise en oeuvre est de 5 à 250 g/hl de lait et, de préférence, elle est de 25 à 100 g/hl de lait.

L'invention sera bien comprise à l'aide des exemples illustratifs qui suivent et qui comportent la description de modes de réalisation avantageux.

Dans ces exemples, on montre l'efficacité de l'utilisation selon l'invention
- d'une part, par détermination directe de la diminution du nombre de phages par rapport à un témoin dans une culture de ferments lactiques destinée à l'industrie des produits laitiers, c'est-à-dire au niveau de la fabrication du "grand levain" (exemple 1),
- d'autre part, et toujours pour chaque cas par rapport à un témoin, dans un certain nombre de fabrications de produits laitiers particuliers (exemples 2 à 4).

### EXEMPLE 1

### Fabrication du grand levain

Dans deux enceintes distinctes, on simule la préparation de deux "grands levains", le premier selon l'art antérieur, le deuxième avec application des caractéristiques du procédé conforme à l'invention.

Le ferment lactique utilisé est la souche Streptococcus lactis IL 061 lyophilisée (aimablement fournie par Madame M.C. CHOPIN de l'I.N.R.A. de Jouy-en-Josas, France).

On inocule cette souche sur 50 ml de milieu de culture M 17 dont la composition est décrite dans l'ouvrage "Technique d'Analyse et de Contrôle dans les IAA", vol. 3, page 110, éd. APRIA.

On introduit respectivement 4 ml de la culture ainsi réalisée après 24 heures d'incubation à 25°C dans deux erlenmeyers contenant chacun 150 g de lait, autoclavé auparavant pendant 30 minutes à 95°C, l'un des deux erlenmeyers contenant de plus, conformément au procédé selon l'invention, 36 mg de glucono-delta-lactone ou GDL sous la forme d'une solution contenant 9 g de GDL par litre, en d'autres termes 4 ml; l'ensemble est maintenu dans les deux cas à 25°C pendant environ 15 heures.

Le lait caillé ainsi obtenu dans les deux erlenmeyers est utilisé pour ensemencer à son tour respectivement 5 litres de lait stérilisé; on laisse incuber à 25°C pendant 15 heures.

L'acidité finale du milieu qui constitue le "grand levain", est de 80°D dans les deux cas.

C'est sur les deux cultures "grand levain" ainsi préparées que l'on pratique une numération des phages.

Pour ce faire, on utilise la méthode dite des "plages de lyse" qui est décrite par W.A. COX en 1980 dans un article intitulé "Detection and enumeration of mesophilic lactic bacteriophages", p. 29-36 de "Starters in the manufacture of cheese", IDF FIL Doc. 129, Bruxelles.

Dans la pratique, on procède comme suit.

Sur un fond de gélose constitué de milieu de culture M 17 (dont la composition est indiquée dans l'ouvrage "Technique d'Analyse et de Contrôle dans les IAA", vol. 3, page 110, éd. APRIA.) et de 18 g d'agar/l, on introduit
- 0,1 ml de culture de Streptococcus lactis, souche IL 561 (cultivée sur le milieu M 17 et âgée de 15 heures),
- 0,05 ml d'une solution molaire de CaCl₂,
- 0,1 ml de la suspension de phages obtenue après filtration du grand levain sur filtre 0,2 µ; ce filtrat peut alors être dilué.

Les phages présents se fixent rapidement sur les bactéries; l'adsorption est terminée au bout d'environ 5 minutes.

On ajoute ensuite dans chaque cas 2,5 ml de gélose molle obtenue par dissolution d'agar dans le milieu de culture M 17 (4 g d'agar par litre de milieu M 17).

L'apparition des plages de lyse se fait dans les 10 heures.

Dans le cas de ce premier essai, la méthode en question montre que, dans aucun des deux cas, il n'y a de phages dans le milieu de culture.

On poursuit alors l'expérience en respectant les conditions prévalant réellement dans l'industrie.

En d'autres termes, on prépare un grand levain tous les trois jours pendant 4 mois dans le même récipient à l'aide d'inoculums provenant du même stock de conservation, c'est-à-dire à partir de la souche lyophilisée.

A chaque dixième préparation de grand levain, on recommence l'essai décrit plus haut et on détermine le nombre de phages présents.

Le premier essai étant affecté du numéro N1, les quatre essais suivants effectués respectivement à la fin des premier, deuxième, troisième et quatrième mois sont affectés des numéros N2 à N5.

Dans le tableau I ci-après, on a indiqué pour chacun de ces essais le nombre de phages décelés.

**TABLEAU I**

| No. de l'essai | Nombre de phages présents | |
|---|---|---|
| | Culture selon l'art antérieur | Culture selon l'invention |
| N1 | Pas de phage | Pas de phage |
| N2 | Absence de phage | Pas de phage |
| N3 | 10² phages/ml | Détection de phages < 10/ml |
| N4 | 10¹¹ phages/ml accident phagique | 10² phages/ml |
| N5 | 10¹¹ phages/ml | 10² phages/ml |

La supériorité du procédé conforme à l'invention résulte clairement des indications réunies dans ce tableau.

### EXEMPLE 2

### Fabrication de cheddar

On rappelle que la fabrication du cheddar comporte les étapes suivantes:

### a) Maturation du lait

A 500 l de lait à une température de 31°C (pasteurisé à 72°C pendant 16 secondes), placés dans une cuve à double enveloppe munie d'un agitateur, on ajoute 1,5% de ferments lactiques (souche Streptococcus lactis).

### b) Coagulation

Au bout de 25 minutes, on ajoute 90 ml d'une présure de force 1:15000. On agite à vitesse moyenne (10 tr/min) pendant 5 minutes. Après arret de l'agitateur, on enlève les pâles d'agitation. On attend 25 minutes pour la formation du caillé.

### c) Découpage

Quand le caillé a atteint la fermeté désirée (environ 1 heure après l'emprésurage), on procède au découpage.

### d) Cuisson des grains de caillé

Après découpage et toujours dans la même cuve, on commence la cuisson progressivement, en injectant de la vapeur dans la double enveloppe de la cuve. On augmente la température jusqu'à 38°C, à raison de 2°C par 5 minutes, sous agitation faible et constante. On maintient la température de 38°C pendant encore 45 minutes.

### e) Egouttage

On arrête l'agitation et on évacue le sérum libre. La température de la cuve est maintenue à 38°C.

### f) Cheddarisation

Le caillé débarrassé de sérum est tranché dans le sens de la longueur pour permettre une bonne exsudation du sérum contenu dans le caillé pendant 15 minutes. Puis le caillé est tranché dans l'autre sens; on sépare les blocs ainsi obtenus et on laisse reposer pendant 15 minutes à une température de 38°C. En fin de cheddarisation, l'acidité titrable doit être de 0,50 à 0,60%. Le pH optimum du caillé est de 5,2 - 5,3.

### g) Emiettage des morceaux de caillé

On émiette les morceaux de caillé au-dessus de la cuve afin que les miettes tombent dans cette dernière.

### h) Salage

On pulvérise du sel sur le caillé émietté à raison de 1 kg par 500 kg estimés de caillé. Le sel est ajouté en trois fois de façon à favoriser sa dissolution.

### i) Moulage et pressage

On prélève une quantité donnée de caillé (par exemple 15 kg) et on la place dans un moule en métal; on applique une pression de 1,7 bar pendant 18 heures.

### j) Séchage

Après arrêt du pressage, le fromage est placé, pendant 2 ou 3 jours, dans une chambre de séchage à 13°C et 70% d'humidité avec retournement quotidien du fromage.

### k) Affinage

Le fromage est entouré d'une pellicule de parafine par plongée pendant 6 secondes dans de la paraffine liquide dont la température est de 118°C. Après durcissement de la paraffine, le fromage est maintenu pour affinage pendant au moins 60 jours à 4°C dans une atmosphère à 85% d'humidité relative.

Pour les besoins de l'exemple, on fabrique un premier échantillon de fromage en procédant comme il vient d'être décrit et parallèlement un deuxième échantillon en procédant de la même manière à la différence près que la maturation du lait est réalisée en ajoutant au lait pasteurisé (72°C - 16 secondes) refroidi à 31°C, une quantité de 1 g de GDL sous forme de poudre par litre de lait, et ensuite les ferments provenant de la souche Streptococcus lactis (IL 561).

La dégustation des deux échantillons de fromage n'a pas montré de difference d'aspect, de texture et des propriétés organoleptiques.

Ces deux fabrications ont été répétées dix fois (pendant une période de 12 mois, il s'agissait d'essais pilotes).

L'infection phagique survenue dans les fabrications, ne comportant pas l'addition d'ion gluconique conforme à l'invention, a nécessité 7 changements de souches pendant cette période.

Dans le cas de la fabrication conforme à l'invention, il n'a été nécessaire de changer qu'une seule fois de souche.

### EXEMPLE 3

### Fabrication de cottage cheese

On rappelle que la fabrication du cottage cheese comporte les étapes suivantes.

On pasteurise 500 l de lait par traitement à 72°C pendant 16 secondes. Le lait ainsi pasteurisé est ensuite refroidi à 31°C et placé dans une cuve à double enveloppe munie d'un agitateur.

On ajoute des ferments lactiques (Streptococcus lactis, Streptococcus cremoris et Leuconostoc citrovorum) pendant le remplissage de la cuve, cette addition se faisant sous la forme de poudre et en une quantité de 5%.

Le lait comportant les ferments lactiques est maintenu à la température de 31°C pendant 5 heures jusqu'à la formation du caillé. L'acidité du sérum est alors de 0,52% et son pH de 4,6.

Le caillé est découpé en blocs qui sont laissés à reposer de 15 à 30 minutes. On introduit de l'eau à une température de 46°C dans la double enveloppe de la cuve et on commence la cuisson du caillé en agitant légèrement (10 tours/minute).

La température de l'eau introduite dans la double enveloppe est augmentée très lentement à 49-52°C pour cuire le caillé, opération qu'il convient de poursuivre pendant environ 100 minutes pour obtenir la fermeté désirée. On élimine une partie du sérum par simple évacuation puis on laisse reposer les blocs de caillé pendant 10 à 30 minutes.

Après refroidissement à 29°C, le caillé est lavé avec de l'eau déminéralisée pendant 10 minutes puis égoutté. Après un nouveau lavage, le caillé est amené à 15°C. Il est lavé une troisième fois puis refroidi à 4°C.

Après égouttage, on découpe le caillé en grains; on veille à ce que la température ne monte pas au-dessus de 7°C.

On prépare une crème devant être mélangée au caillé découpé pour fournir le cottage cheese final.

Pour ce faire, on mélange 56,3% en poids de lait entier avec 39,7% en poids de crème sucrée et avec 4,0% en poids de sel.

On mélange la crème et le caillé découpé à raison de 167 litres de crème pour 500 litres de caillé en malaxant doucement pendant 15 minutes.

Le produit fini a les caractéristiques suivantes:

| | |
|---|---|
| - matières grasses | 4,5% en poids |
| - humidité | 79 % en poids |
| - pH | 5,2. |

Pour les besoins de l'exemple, on fabrique un premier échantillon de cottage cheese en procédant comme il vient d'être décrit et, parallèlement, un deuxième échantillon en procédant de la même manière à la différence près qu'en même temps que les ferments lactiques on introduit par litre de lait une quantité de 0,5 g de GDL sous la forme de poudre.

Ces deux fabrications ont été répétées 15 fois (pendant une période de 12 mois, il s'agissait d'essais pilotes).

L'infection phagique survenue dans les fabrications, ne comportant pas l'addition d'ion gluconique conforme à l'invention, a nécessité 5 changements de souches pendant cette période.

Dans le cas des fabrications conformes à l'invention, il n'a pas été nécessaire de changer de souche pendant toute l'année.

### EXEMPLE 4

### Fabrication d'un fromage à pâte pressée du type Saint-Paulin

On rappelle que la fabrication des fromages du genre en question comporte les étapes suivantes.

Une quantité de 500 litres de lait est amenée, dans les conditions industrielles normales, à 26,7 g/l de matière grasse.

On procède à une pasteurisation à 72°C pendant 40 secondes, puis on refroidit à 31°C.

Le lait traité ainsi thermiquement, est amené dans une cuve conçue pour la fabrication des fromages à pâte pressée; il s'agit d'une cuve ovale du type 3000 l fabriquée par la Société Guérin S.A. 79210 Mauzé-sur-le-Mignon (France) équipée de deux tranche-caillés.

Le pH mesuré sur le lait entier au moment de son introduction à 31°C dans le cuve est de 6,65. Un apport de sel de calcium soluble est ensuite réalisé sous la forme de 490 ml d'une solution de 510 g/l de chlorure de calcium dans l'eau.

La maturation de ce lait est effectuée par un apport de ferments lactiques mésophiles préparés dans les conditions suivantes: une préparation concentrée et congelée de ferments lactiques mésophiles, commercialisée par les Laboratoires Miles - Division Marshall (rue des Longs Réages - 28280 Epernon - France), est cultivée dans le milieu nutritif Marstar commercialisé par ces mêmes Laboratoires, en appliquant strictement les conditions de préparation préconisées par ces Laboratoires.

Une quantité de 3 litres de cette culture (0,6% en volume par rapport au volume de lait traité) est mélangée au lait au moment de l'introduction de ce dernier dans la cuve de maturation.

Après 30 minutes de maturation, le pH du lait est de 6,60 et sa température de 31°C.

L'emprésurage est effectué dans la cuve de maturation; pour ce faire, on introduit par litre de lait une quantité de 0,33 ml d'une préparation commerciale d'enzymes coagulantes renfermant 520 mg de chymosine par litre.

Le temps de prise est de 16 minutes; on laisse la coagulation se poursuivre, selon les conditions traditionnelles, pendant 6 minutes; cette durée supplémentaire est appelée temps de durcissement.

Le coagulum est ensuite découpé dans la cuve par mise en rotation lente des deux tranche-caillés qui accomplissent chacun 3 tours en 1 minute.

Le coagulum découpé est laissé à reposer pendant 5 minutes.

On procède ensuite au décaillage à l'aide des deux tranche-caillés, en amenant ces derniers pendant 1 minute à une vitesse de rotation de 12,5 tours/minute, puis pendant 3 minutes à une vitesse de 10 tours/minute.

A la suite de ce traitement, les grains de caillé ont atteint la taille désirée qui est comprise entre 0,5 et 1 cm. Le mélange caillé-sérum est laissé à reposer pendant 5 minutes. Le pH est alors de 6,58.

L'opération subséquente de lavage du caillé comporte l'élimination du sérum surnageant (qui représente 33% du volume initial de 500 litres) à l'aide d'une pompe, puis l'addition d'un volume égal d'eau potable d'une température de 32°C.

On poursuit par un brassage, en inversant le sens de rotation des tranche-caillés; ce brassage comporte une première phase de 6 minutes en vitesse rapide (13 tours/minute) en vue d'individualiser les grains qui ont tendance à s'agglomérer, puis une seconde phase de 2 minutes à une vitesse de 7 tours/minute. La température est alors de 31,5°C.

L'ensemble caillé-sérum est transféré dans un bac de prépressage (longueur 1,82 m; largeur 1,75 m; hauteur 0,62 m, dont deux faces verticales opposées sont perforées pour permettre l'égouttage du sérum), équipé au préalable intérieurement d'une toile de lin d'une trame de l'ordre de 2 mm. Cette toile est ensuite repliée sur la partie supérieure du caillé de façon à l'enfermer totalement. L'opération de prépressage en bac est effectuée en 5 minutes par répartition sur toute la surface supérieure d'une charge telle qu'il en résulte une pression régulière d'environ 600 Pa (6 g/cm²).

On obtient ainsi une plaque de caillé ferme et cohésive qui est découpée en pains à base carrée de 38,5 cm de côté; ces pains sont introduits dans des moules individuels et mis sous pression dans un local à 18°C. Le pressage est effectué pendant 45 minutes environ, avec une pression de 6.10³ Pa environ (60 g/cm²), un retournement des pains (en vue d'une régularisation de la forme) étant réalisé 15 minutes après le début.

En fin de pressage, chaque pain est découpé en douze parallélépipèdes qui correspondent à la taille définitive des fromages (longueur: 19 cm, largeur et hauteur: 6,5 cm). Le pH est alors de 6,30.

Les ferments lactiques présents dans lesdits fromages poursuivent ensuite l'acidification de manière à amener au bout de 4 heures le pH à 5,6.

On procède enfin au salage des fromages.

Au bout de 18 heures, cette opération dite de saumurage est terminée; le pH est de 5,40.

L'analyse des fromages terminés montre que la matière sèche totale est de 50,08%, la matière grasse totale de 20,5% et le rapport matière grasse/matière sèche (G/S) de 40,93.

Pour les besoins de l'exemple, on fabrique un premier échantillon de fromage en procédant comme il vient d'être décrit et, parallèlement, un deuxième échantillon en procédant de la même manière à la différence près qu'au moment de la maturation, on ajoute 0,2 g de GDL pulvérulente par litre de lait.

A la sortie du saumurage, l'analyse des fromages fabriqués avec ajout de GDL donne les valeurs suivantes:

| | |
|---|---|
| - matière sèche totale | 52,10 |
| - matière grasse totale | 20,75 |
| - G/S | 39,83. |

Ces deux fabrications ont été répétées 20 fois pendant une durée totale de deux ans.

L'infection phagique survenue dans les fabrications, ne comportant pas l'addition d'ion gluconique conforme à l'invention, a nécessité 7 changements de souches pendant cette période.

Dans le cas des fabrications conformes à l'invention, il n'a pas été nécessaire de changer une seule fois de souche.

## Revendications

1. Utilisation des ions gluconiques et/ou glucoheptoniques pour la lutte contre la prolifération des phages dans la fabrication de produits laitiers.

2. Utilisation des ions gluconiques et/ou glucoheptoniques selon la revendication 1, caractérisée par le fait que la quantité de l'ion gluconique et/ou glucoheptonique mise en oeuvre est de 2 à 500 g/hectolitre de lait.

3. Utilisation des ions gluconiques et/ou glucoheptoniques selon l'une des revendications 1 ou 2, caractérisée par le fait que lesdits ions sont mis en oeuvre au moment de la phase de maturation.

## Claims

1. Use of gluconic and/or glucoheptonic ions for counteracting the proliferation of phages in dairy products.

2. Use of gluconic and/or glucoheptonic ions according to claim 1, characterized by the fact that the amount of gluconic and/or glucoheptonic ion used is from 2 to 500 g/hectoliter of milk.

3. Use of gluconic and/or glucoheptonic ions according to one of claims 1 or 2, characterized by the fact that said ions are used at the moment of the maturation phase.

## Patentansprüche

1. Verwendung von Gluconsäure- und/oder Glucoheptonsäureionen zur Bekämpfung der Vermehrung der Phagen bei der Erzeugung von Milchprodukten.

2. Verwendung von Gluconsäure- und/oder Glucoheptonsäureionen gemäß Anspruch 1, dadurch gekennzeichnet, daß die eingesetzte Menge des Gluconsäure- und/oder Glucoheptonsäureions von 2 bis 500 g/Hektoliter Milch beträgt.

3. Verwendung der Gluconsäure- und/oder Glucoheptonsäureionen gemäß einem der Ansprüche 1 oder 2, dadurch gekennzeichnet, daß diese Ionen im Augenblick der Reifungsphase eingesetzt werden.
